# EUROPEAN PATENT APPLICATION

(11) **EP 4 645 952 A1**
(43) Date of publication of application: **05.11.2025**
(21) Application number: 23920350.8
(22) Date of filing: 07.02.2023
(51) Int. Cl.: H04W 36/00

(54) **COMMUNICATION METHOD AND RELATED APPARATUS**

(71) Applicant: Huawei Technologies Co., Ltd., Shenzhen, Guangdong 518129 (CN)
(72) Inventor: WANG, Wei, Shenzhen, Guangdong 518129 (CN); XING, Weijun, Shenzhen, Guangdong 518129 (CN); WU, Shaoyun, Shenzhen, Guangdong 518129 (CN); ZHENG, Xiaoqing, Shenzhen, Guangdong 518129 (CN); YAO, Chuanqun, Shenzhen, Guangdong 518129 (CN)
(74) Representative: Pfenning, Meinig & Partner mbB
(86) International application number: PCT/CN2023/074744
(87) International publication number: WO 2024/164135

(57) **Abstract**

A communication method and a related apparatus are provided. The method includes: obtaining a handover decision, where the handover decision includes information about a terminal device, address information of a first satellite, and address information of a second satellite, the first satellite is a source satellite of the terminal device, and the second satellite is a target satellite of the terminal device; and sending a first message to the second satellite, where the first message indicates the second satellite to obtain user data of the terminal device from the first satellite. The method in this application helps relieve access pressure of a ground station.

## Description

### TECHNICAL FIELD

This application relates to the field of communication technologies, and in particular, to a communication method and a related apparatus.

### BACKGROUND

A satellite network mainly includes user equipment (user equipment, UE), a satellite, and a ground station. Currently, satellites are classified into low earth orbit satellites, medium earth orbit satellites, and high earth orbit satellites based on orbit altitudes. The high earth orbit satellites are stationary relative to the ground, and the low earth orbit satellites and the medium earth orbit satellites constantly move relative to the ground. Due to such mobility, the UE accesses different satellites at intervals. This process is referred to as handover. Because the satellite is prone to faults, a data loss risk exists if user data generated after the UE accesses the satellite is directly stored on the satellite. Therefore, the user data is usually stored on the ground, for example, in a database (database, DB) of the ground station. Each time the UE accesses a new satellite, the new satellite needs to pull the user data from the ground station. However, in consideration of a large UE quantity and frequent handover between satellites, the ground station faces great access pressure.

### SUMMARY

This application provides a communication method and a related apparatus, to help relieve access pressure of a ground station.

According to a first aspect, this application provides a communication method. The method includes:
obtaining a handover decision, where the handover decision includes information about a terminal device, address information of a first satellite, and address information of a second satellite, the first satellite is a source satellite of the terminal device, and the second satellite is a target satellite of the terminal device; and
sending a first message to the second satellite, where the first message indicates the second satellite to obtain user data of the terminal device from the first satellite.

It should be understood that a new network function is introduced in this application, for example, a satellite user data management function (satellite user data management function, SUDMF). Optionally, the new network function may also be referred to as another name. This is not limited herein. Optionally, the new network function may be deployed on a satellite, or may be deployed on the ground, for example, in a ground station or a data center. The new network function is mainly responsible for user data management. Specifically, when the new network function obtains a handover decision, the new network function may send a first message to a target satellite (for example, the second satellite). The first message indicates the target satellite to obtain user data of a terminal device from a source satellite (for example, the first satellite). In other words, after the target satellite receives the first message, the target satellite may directly subscribe to the user data of the terminal device from the source satellite, instead of pulling data from a database (database, DB) of a ground station. Therefore, access pressure caused by the target satellite on the ground station in a handover scenario can be reduced.

In a possible implementation, after sending the first message to the second satellite, the method further includes:
receiving a handover message from the first satellite, where the handover message indicates that the terminal device is disconnected from the first satellite; and
updating the second satellite to a primary satellite of the terminal device based on the handover message, where the primary satellite is configured to establish contact with a database DB corresponding to the terminal device, and keep the user data of the terminal device synchronized between the primary satellite and the DB.

In this implementation, after the terminal device is handed over from the first satellite (that is, the source satellite), the source satellite may send the handover message to the SUDMF, so that the SUDMF may update the primary satellite of the terminal device from the first satellite to the second satellite based on the received handover message. This helps the second satellite subsequently establish contact with the DB and synchronize user data.

In a possible implementation, the method further includes:
sending a notification message to the second satellite, where the notification message indicates that the second satellite is the primary satellite of the terminal device.

In this implementation, after the terminal device is successfully handed over, the primary satellite of the terminal device needs to be changed to the target satellite (for example, the second satellite). Specifically, the SUDMF may send the notification message to the second satellite, to notify the second satellite that the second satellite is set as the primary satellite of the terminal device. Therefore, the second satellite may subsequently establish contact with the DB and synchronize user data.

In a possible implementation, before obtaining the handover decision, the method further includes:
receiving a registration request from the DB, where the registration request includes information about the DB; and
sending a registration response to the DB, where the registration response indicates that the DB is successfully registered.

In this implementation, when a system is initialized or a new DB is added to the system, the DB registers with the SUDMF, and only a DB that is successfully registered can be allocated to the terminal device for use. This facilitates standardized management.

In a possible implementation, before obtaining the handover decision, the method further includes:
receiving a first query request from the first satellite, where the first query request includes a first identifier of the terminal device; and
sending a first query response to the first satellite, where the first query response includes first information, and the first information is used to determine address information of the DB corresponding to the terminal device.

In this implementation, when the terminal device initially accesses a satellite (for example, the first satellite), the first satellite may have no data related to the terminal device. Therefore, the first satellite may send the first query request to the SUDMF, and the SUDMF searches for corresponding DB address information based on the first identifier of the terminal device included in the first query request, and returns the DB address information to the first satellite. It may be understood that if the SUDMF has maintained a mapping relationship between the first identifier and the DB address information, that is, a corresponding DB address can be found, the found DB address information is fed back to the first satellite. If the SUDMF has not maintained a mapping relationship between the first identifier and the DB address information, that is, the DB address information corresponding to the first identifier is not found, the SUDMF may allocate a DB address to the terminal device.

In a possible implementation, after sending the notification message to the second satellite, the method further includes:
receiving a second query request from the first satellite, where the second query request includes the first identifier of the terminal device, and the first satellite is not the primary satellite corresponding to the terminal device; and
sending a second query response to the first satellite, where if address information of the primary satellite corresponding to the terminal device exists, the second query response includes the address information of the primary satellite corresponding to the terminal device, or if address information of the primary satellite corresponding to the terminal device does not exist, the second query response includes the first information or second information, the first information is used to determine the address information of the DB corresponding to the terminal device, and the second information indicates that the address information of the primary satellite corresponding to the terminal device is not included.

In this implementation, after the terminal device is successfully handed over, the target satellite is used as the primary satellite of the terminal device, and the source satellite is used as a non-primary satellite. For the non-primary satellite, if the non-primary satellite needs to query user data of the terminal device, the non-primary satellite (for example, the first satellite) may send the second query request to the SUDMF, and the SUDMF may query, based on the first identifier of the terminal device included in the second query request, whether address information of the primary satellite corresponding to the terminal device exists; and if the address information exists, return the address information of the corresponding primary satellite; or if the address information does not exist, return the first information, where the first information is used to determine the address information of the DB in which the user data is stored, or return the second information, where the second information indicates that the address information of the primary satellite corresponding to the terminal device is not included. Therefore, the non-primary satellite may determine, based on the information carried in the second query response fed back by the SUDMF, to whom the user data of the terminal device should be pulled. It may be understood that, if the user data can be directly pulled from the primary satellite, it is conducive to relieving access pressure of the DB in the ground station.

In a possible implementation, that the first information is used to determine the address information of the DB corresponding to the terminal device includes:
the first information indicates the address information of the DB corresponding to the terminal device; or
the first information indicates a second identifier of the terminal device, and the second identifier of the terminal device is used to determine the address information of the DB corresponding to the terminal device.

In this implementation, the SUDMF may indicate the address information of the DB in a direct indication manner or an indirect indication manner, and the indication manner is flexible. The direct indication may be understood as that the first information directly includes the address information of the DB, and the indirect indication may be understood as that the first information includes the second identifier of the terminal device. A satellite that receives the second identifier may calculate the corresponding DB address information based on the second identifier and a calculation function.

In a possible implementation, obtaining the handover decision includes:
receiving the handover decision; or
receiving status information from at least two satellites, where status information of each satellite includes one or more of the following information: orbit information of the satellite, location information of the satellite, beam occupation of the satellite, and information about a terminal device that accesses the satellite; and the at least two satellites include the first satellite and the second satellite; and
determining the handover decision based on the status information of the at least two satellites.

In this implementation, the SUDMF may receive the handover decision sent by a management device of the ground station or another management satellite (that is, some devices or satellites having a handover decision function), or the SUDMF may autonomously determine the handover decision. This solution has diverse implementations and is highly applicable.

According to a second aspect, this application provides a communication method. The method is applied to a second satellite, and the method includes:
receiving a first message, where the first message indicates the second satellite to obtain user data of a terminal device from a first satellite;
sending a data subscription request to the first satellite, where the data subscription request is used to request the user data of the terminal device; and
receiving the user data of the terminal device from the first satellite, to keep the user data of the terminal device synchronized between the first satellite and the second satellite.

In this application, after a target satellite (for example, the second satellite) of the terminal device receives the first message, the target satellite may send the data subscription request to a source satellite (for example, the first satellite), to request to synchronize the user data of the terminal device.

In a possible implementation, the method further includes:
receiving a notification message, where the notification message indicates that the second satellite is a primary satellite of the terminal device; or
receiving a handover message, where the handover message indicates that the terminal device is disconnected from the first satellite.

In this implementation, after the terminal device is successfully handed over, the primary satellite of the terminal device needs to be changed to the target satellite (for example, the second satellite). Specifically, an SUDMF may send the notification message to the second satellite, to notify the second satellite that the second satellite is set as the primary satellite. Optionally, the source satellite (for example, the first satellite) may send the notification message or the handover message to the second satellite, to notify the second satellite that the second satellite is set as the primary satellite of the terminal device.

In a possible implementation, before receiving the user data of the terminal device from the first satellite, the method further includes:
receiving a data subscription response message from the first satellite.

In this implementation, after the target satellite sends the data subscription request to the source satellite, the source satellite may send the data subscription response message to the target satellite. This request-response communication manner helps the target satellite learn in a timely manner whether the source satellite successfully receives the data subscription request.

In a possible implementation, before receiving the first message, the method further includes:
sending a data query request to the first satellite, where the data query request is used to query the user data of the terminal device, and the first satellite is a primary satellite of the terminal device; and
receiving the user data of the terminal device from the first satellite.

In this implementation, before the terminal device is handed over, the source satellite is used as the primary satellite of the terminal device, the target satellite is used as a non-primary satellite, and the non-primary satellite may send the data query request to the primary satellite. Therefore, after receiving the data query request, the primary satellite may feed back the currently stored user data of the terminal device to the non-primary satellite in response to the request.

In a possible implementation, the method further includes:
sending status information of the second satellite, where the status information of the second satellite includes one or more of the following information: orbit information of the second satellite, location information of the second satellite, beam occupation of the second satellite, and information about a terminal device that accesses the second satellite.

In this implementation, the second satellite sends the status information of the second satellite, so that a device having a handover decision function determines, based on the received status information of the second satellite, whether to perform handover.

According to a third aspect, this application provides a communication method. The method is applied to a first satellite, and the method includes:
receiving a data subscription request from a second satellite, where the data subscription request is used to request user data of a terminal device; and
sending the user data of the terminal device to the second satellite, to keep the user data of the terminal device synchronized between the first satellite and the second satellite.

In this application, after a source satellite (for example, the first satellite) receives the data subscription request from a target satellite (for example, the second satellite), the first satellite may synchronize the user data of the terminal device to the second satellite.

In a possible implementation, the method further includes:
sending a handover message, where the handover message indicates that the terminal device is disconnected from the first satellite; or
sending a notification message, where the notification message indicates that the second satellite is a primary satellite of the terminal device.

In this implementation, after the terminal device is successfully handed over, the primary satellite of the terminal device needs to be changed to the target satellite (for example, the second satellite). Specifically, the source satellite (for example, the first satellite) may send the notification message or the handover message to the second satellite, to notify the second satellite that the second satellite is set as the primary satellite of the terminal device.

In a possible implementation, before sending the user data of the terminal device to the second satellite, the method further includes:
sending a data subscription response message to the second satellite.

In this implementation, after the target satellite sends the data subscription request to the source satellite, the source satellite may send the data subscription response message to the target satellite. This request-response communication manner helps the target satellite learn in a timely manner whether the source satellite successfully receives the data subscription request.

In a possible implementation, before receiving the data subscription request from the second satellite, the method further includes:
receiving a data query request from the second satellite, where the data query request is used to query the user data of the terminal device, and the first satellite is a primary satellite of the terminal device; and
sending the user data of the terminal device to the second satellite.

In this implementation, before the terminal device is handed over, the source satellite is used as the primary satellite of the terminal device, the target satellite is used as a non-primary satellite, and the non-primary satellite may send the data query request to the primary satellite. Therefore, after receiving the data query request, the primary satellite may feed back the currently stored user data of the terminal device to the non-primary satellite in response to the request.

In a possible implementation, before receiving the data subscription request from the second satellite, the method further includes:
sending a first query request, where the first query request includes a first identifier of the terminal device; and
receiving a first query response, where the first query response includes first information, and the first information is used to determine address information of a DB corresponding to the terminal device.

In this implementation, when the terminal device initially accesses a satellite (for example, the first satellite), the first satellite may have no data related to the terminal device. Therefore, the first satellite may send the first query request to the SUDMF, and the SUDMF searches for corresponding DB address information based on the first identifier of the terminal device included in the first query request, and returns the DB address information to the first satellite. It may be understood that if the SUDMF has maintained a mapping relationship between the first identifier and the DB address information, that is, a corresponding DB address can be found, the found DB address information is fed back to the first satellite. If the SUDMF has not maintained a mapping relationship between the first identifier and the DB address information, that is, the DB address information corresponding to the first identifier is not found, the SUDMF may allocate a DB address to the terminal device.

In a possible implementation, after sending the user data of the terminal device to the second satellite, the method further includes:
sending a second query request, where the second query request includes the first identifier of the terminal device, and the first satellite is not the primary satellite corresponding to the terminal device; and
receiving a second query response, where the second query response includes address information of the primary satellite corresponding to the terminal device, or the second query response includes the first information, and the first information is used to determine the address information of the DB corresponding to the terminal device.

In this implementation, after the terminal device is successfully handed over, the target satellite is used as the primary satellite of the terminal device, and the source satellite is used as a non-primary satellite. For the non-primary satellite, if the non-primary satellite needs to query user data of the terminal device, the non-primary satellite (for example, the first satellite) may send the second query request to the SUDMF, and the SUDMF may query, based on the first identifier of the terminal device included in the second query request, whether address information of the primary satellite corresponding to the terminal device exists; and if the address information exists, return the address information of the corresponding primary satellite; or if the address information does not exist, return the first information, where the first information is used to determine the address information of the DB in which the user data is stored. Therefore, the non-primary satellite may determine, based on the information carried in the second query response fed back by the SUDMF, to whom the user data of the terminal device should be pulled. It may be understood that, if the user data can be directly pulled from the primary satellite, it is conducive to relieving access pressure of the DB in the ground station.

In a possible implementation, that the first information is used to determine the address information of the DB corresponding to the terminal device includes:
the first information indicates the address information of the DB corresponding to the terminal device; or
the first information indicates a second identifier of the terminal device, and the second identifier of the terminal device is used to determine the address information of the DB corresponding to the terminal device.

In this implementation, the SUDMF may indicate the address information of the DB in a direct indication manner or an indirect indication manner, and the indication manner is flexible. The direct indication may be understood as that the first information directly includes the address information of the DB, and the indirect indication may be understood as that the first information includes the second identifier of the terminal device. A satellite that receives the second identifier may calculate the corresponding DB address information based on the second identifier and a calculation function.

In a possible implementation, the first information indicates the second identifier of the terminal device, and the second identifier of the terminal device is used to determine the address information of the DB corresponding to the terminal device; and after sending the user data of the terminal device to the second satellite, the method further includes:
sending a second query request, where the second query request includes the first identifier of the terminal device, and the first satellite is not the primary satellite corresponding to the terminal device;
receiving a second query response, where the second query response includes second information, and the second information indicates that address information of the primary satellite corresponding to the terminal device is not included; and
determining, based on the second identifier of the terminal device, the address information of the DB corresponding to the terminal device.

In this implementation, after the terminal device is successfully handed over, the target satellite is used as the primary satellite of the terminal device, and the source satellite is used as a non-primary satellite. For the non-primary satellite, if the non-primary satellite needs to query user data of the terminal device, the non-primary satellite (for example, the first satellite) may send the second query request to the SUDMF, and the SUDMF may query, based on the first identifier of the terminal device included in the second query request, whether address information of the primary satellite corresponding to the terminal device exists; and if the address information exists, return the address information of the corresponding primary satellite; or if the address information does not exist, return the second information, where the second information indicates that the address information of the primary satellite corresponding to the terminal device is not included. It should be understood that if the second query response includes the second information, the first satellite may subsequently determine, based on the second identifier of the terminal device, the address information of the DB corresponding to the terminal device, and then request the user data from the corresponding DB. In other words, the non-primary satellite may determine, based on the information carried in the second query response fed back by the SUDMF, to whom the user data of the terminal device should be pulled. It may be understood that, if the user data can be directly pulled from the primary satellite, it is conducive to relieving access pressure of the DB in the ground station.

In a possible implementation, the method further includes:
sending status information of the first satellite, where the status information of the first satellite includes one or more of the following information: orbit information of the first satellite, location information of the first satellite, beam occupation of the first satellite, and information about a terminal device that accesses the first satellite.

In this implementation, the first satellite sends the status information of the first satellite, so that a device having a handover decision function determines, based on the received status information of the first satellite, whether to perform handover.

According to a fourth aspect, this application provides a communication apparatus. The apparatus includes:
a transceiver unit, configured to obtain a handover decision, where the handover decision includes information about a terminal device, address information of a first satellite, and address information of a second satellite, the first satellite is a source satellite of the terminal device, and the second satellite is a target satellite of the terminal device.

The transceiver unit is configured to send a first message to the second satellite, where the first message indicates the second satellite to obtain user data of the terminal device from the first satellite.

In a possible implementation, after sending the first message to the second satellite, the transceiver unit is further configured to receive a handover message from the first satellite, where the handover message indicates that the terminal device is disconnected from the first satellite; and
the apparatus further includes a processing unit, and the processing unit is configured to:
update the second satellite to a primary satellite of the terminal device based on the handover message, where the primary satellite is configured to establish contact with a database DB corresponding to the terminal device, and keep the user data of the terminal device synchronized between the primary satellite and the DB.

In a possible implementation, the transceiver unit is further configured to:
send a notification message to the second satellite, where the notification message indicates that the second satellite is the primary satellite of the terminal device.

In a possible implementation, before obtaining the handover decision, the transceiver unit is further configured to:
receive a registration request from the DB, where the registration request includes information about the DB; and
send a registration response to the DB, where the registration response indicates that the DB is successfully registered.

In a possible implementation, before obtaining the handover decision, the transceiver unit is further configured to:
receive a first query request from the first satellite, where the first query request includes a first identifier of the terminal device; and
send a first query response to the first satellite, where the first query response includes first information, and the first information is used to determine address information of the DB corresponding to the terminal device.

In a possible implementation, after sending the notification message to the second satellite, the transceiver unit is further configured to:
receive a second query request from the first satellite, where the second query request includes the first identifier of the terminal device, and the first satellite is not the primary satellite corresponding to the terminal device; and
send a second query response to the first satellite, where if address information of the primary satellite corresponding to the terminal device exists, the second query response includes the address information of the primary satellite corresponding to the terminal device, or if address information of the primary satellite corresponding to the terminal device does not exist, the second query response includes the first information or second information, the first information is used to determine the address information of the DB corresponding to the terminal device, and the second information indicates that the address information of the primary satellite corresponding to the terminal device is not included.

In a possible implementation, that the first information is used to determine the address information of the DB corresponding to the terminal device includes:
the first information indicates the address information of the DB corresponding to the terminal device; or
the first information indicates a second identifier of the terminal device, and the second identifier of the terminal device is used to determine the address information of the DB corresponding to the terminal device.

In a possible implementation, when the handover decision is obtained,
the transceiver unit is configured to receive the handover decision; or
the transceiver unit is configured to receive status information from at least two satellites, where status information of each satellite includes one or more of the following information: orbit information of the satellite, location information of the satellite, beam occupation of the satellite, and information about a terminal device that accesses the satellite; and the at least two satellites include the first satellite and the second satellite; and
the processing unit is configured to determine the handover decision based on the status information of the at least two satellites.

According to a fifth aspect, this application provides a communication apparatus. The communication apparatus is a second satellite, and the apparatus includes:
a transceiver unit, configured to receive a first message, where the first message indicates the second satellite to obtain user data of a terminal device from a first satellite.

The transceiver unit is configured to send a data subscription request to the first satellite, where the data subscription request is used to request the user data of the terminal device.

The transceiver unit is configured to receive the user data of the terminal device from the first satellite, to keep the user data of the terminal device synchronized between the first satellite and the second satellite.

In a possible implementation, the transceiver unit is further configured to:
receive a notification message, where the notification message indicates that the second satellite is a primary satellite of the terminal device; or
receive a handover message, where the handover message indicates that the terminal device is disconnected from the first satellite.

In a possible implementation, before receiving the user data of the terminal device from the first satellite, the transceiver unit is further configured to:
receive a data subscription response message from the first satellite.

In a possible implementation, before receiving the first message, the transceiver unit is further configured to:
send a data query request to the first satellite, where the data query request is used to query the user data of the terminal device, and the first satellite is a primary satellite of the terminal device; and
receive the user data of the terminal device from the first satellite.

In a possible implementation, the transceiver unit is further configured to:
send status information of the second satellite, where the status information of the second satellite includes one or more of the following information: orbit information of the second satellite, location information of the second satellite, beam occupation of the second satellite, and information about a terminal device that accesses the second satellite.

According to a sixth aspect, this application provides a communication apparatus. The apparatus is a first satellite, and the apparatus includes:
a transceiver unit, configured to receive a data subscription request from a second satellite, where the data subscription request is used to request user data of a terminal device.

The transceiver unit is configured to send the user data of the terminal device to the second satellite, to keep the user data of the terminal device synchronized between the first satellite and the second satellite.

In a possible implementation, the transceiver unit is further configured to:
send a handover message, where the handover message indicates that the terminal device is disconnected from the first satellite; or
send a notification message, where the notification message indicates that the second satellite is a primary satellite of the terminal device.

In a possible implementation, before sending the user data of the terminal device to the second satellite, the transceiver unit is further configured to:
send a data subscription response message to the second satellite.

In a possible implementation, before receiving the data subscription request from the second satellite, the transceiver unit is further configured to:
receive a data query request from the second satellite, where the data query request is used to query the user data of the terminal device, and the first satellite is a primary satellite of the terminal device; and
send the user data of the terminal device to the second satellite.

In a possible implementation, before receiving the data subscription request from the second satellite, the transceiver unit is further configured to:
send a first query request, where the first query request includes a first identifier of the terminal device; and
receive a first query response, where the first query response includes first information, and the first information is used to determine address information of a DB corresponding to the terminal device.

In a possible implementation, after sending the user data of the terminal device to the second satellite, the transceiver unit is further configured to:
send a second query request, where the second query request includes the first identifier of the terminal device, and the first satellite is not the primary satellite corresponding to the terminal device; and
receive a second query response, where the second query response includes address information of the primary satellite corresponding to the terminal device, or the second query response includes the first information, and the first information is used to determine the address information of the DB corresponding to the terminal device.

In a possible implementation, that the first information is used to determine the address information of the DB corresponding to the terminal device includes:
the first information indicates the address information of the DB corresponding to the terminal device; or
the first information indicates a second identifier of the terminal device, and the second identifier of the terminal device is used to determine the address information of the DB corresponding to the terminal device.

In a possible implementation, the first information indicates the second identifier of the terminal device, and the second identifier of the terminal device is used to determine the address information of the DB corresponding to the terminal device; and after sending the user data of the terminal device to the second satellite, the transceiver unit is further configured to:
send a second query request, where the second query request includes the first identifier of the terminal device, and the first satellite is not the primary satellite corresponding to the terminal device; and
receive a second query response, where the second query response includes second information, and the second information indicates that address information of the primary satellite corresponding to the terminal device is not included; and
a processing unit is configured to determine, based on the second identifier of the terminal device, the address information of the DB corresponding to the terminal device.

In a possible implementation, the transceiver unit is further configured to:
send status information of the first satellite, where the status information of the first satellite includes one or more of the following information: orbit information of the first satellite, location information of the first satellite, beam occupation of the first satellite, and information about a terminal device that accesses the first satellite.

According to a seventh aspect, this application provides a communication apparatus. The communication apparatus may include a processor, a transceiver, and a memory. The processor, the transceiver, and the memory are coupled. The memory stores a computer program. The processor and the transceiver are configured to invoke the computer program in the memory, to enable the communication apparatus to perform the method according to any one of the first aspect.

In a possible design, the communication apparatus may be a chip that implements the method in the first aspect or a device that includes the chip.

According to an eighth aspect, this application provides a communication apparatus. The communication apparatus may be a second satellite and include a processor, a transceiver, and a memory. The processor, the transceiver, and the memory are coupled. The memory stores a computer program. The processor and the transceiver are configured to invoke the computer program in the memory, to enable the communication apparatus to perform the method according to any one of the second aspect.

In a possible design, the communication apparatus may be a chip that implements the method in the second aspect or a device that includes the chip.

According to a ninth aspect, this application provides a communication apparatus. The communication apparatus may be a first satellite and include a processor, a transceiver, and a memory. The processor, the transceiver, and the memory are coupled. The memory stores a computer program. The processor and the transceiver are configured to invoke the computer program in the memory, to enable the communication apparatus to perform the method according to any one of the third aspect.

In a possible design, the communication apparatus may be a chip that implements the method in the third aspect or a device that includes the chip.

According to a tenth aspect, this application provides a communication apparatus. The communication apparatus may include a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the first aspect by using a logic circuit or by executing code instructions.

According to an eleventh aspect, this application provides a communication apparatus. The communication apparatus may be a second satellite and include a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the second aspect by using a logic circuit or by executing code instructions.

According to a twelfth aspect, this application provides a communication apparatus. The communication apparatus may be a first satellite and include a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any one of the third aspect by using a logic circuit or by executing code instructions.

According to a thirteenth aspect, this application provides a computer-readable storage medium. The storage medium stores a computer program or instructions. When the computer program or the instructions are executed by a computer, the method according to any one of the first aspect is implemented.

According to a fourteenth aspect, this application provides a computer-readable storage medium. The storage medium stores a computer program or instructions. When the computer program or the instructions are executed by a computer, the method according to any one of the second aspect is implemented.

According to a fifteenth aspect, this application provides a computer-readable storage medium. The storage medium stores a computer program or instructions. When the computer program or the instructions are executed by a computer, the method according to any one of the third aspect is implemented.

According to a sixteenth aspect, this application provides a computer program product. When a computer reads and executes the computer program product, the computer is enabled to perform the method according to any one of the first aspect.

According to a seventeenth aspect, this application provides a computer program product. When a computer reads and executes the computer program product, the computer is enabled to perform the method according to any one of the second aspect.

According to an eighteenth aspect, this application provides a computer program product. When a computer reads and executes the computer program product, the computer is enabled to perform the method according to any one of the third aspect.

According to a nineteenth aspect, this application provides a communication system. The communication system includes the communication apparatus according to the fourth aspect, the seventh aspect, or the tenth aspect, the communication apparatus according to the fifth aspect, the eighth aspect, or the eleventh aspect, and the communication apparatus according to the sixth aspect, the ninth aspect, or the twelfth aspect.

### BRIEF DESCRIPTION OF DRAWINGS

FIG. 1 is a diagram of an architecture of a communication system according to an embodiment of this application;
FIG. 2 is an interaction diagram of a communication method according to an embodiment of this application;
FIG. 3 is an interaction diagram of a registration process according to an embodiment of this application;
FIG. 4 is an interaction diagram of an initial access procedure according to an embodiment of this application;
FIG. 5 is an interaction diagram of a data query process of a non-primary satellite according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

### DESCRIPTION OF EMBODIMENTS

The following describes technical solutions in embodiments of this application with reference to the accompanying drawings in embodiments of this application. Terms "system" and "network" in embodiments of this application may be used interchangeably. Unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists. A and B may be singular or plural. In addition, in the descriptions of this application, unless otherwise specified, "a plurality of' means two or more. "At least one of the following items (pieces)" or a similar expression thereof means any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between network elements and same or similar items whose functions are basically the same in embodiments of this application. A person skilled in the art may understand that the words such as "first" and "second" do not limit a quantity or an execution order, and the words such as "first" and "second" do not necessarily indicate a specific difference.

Reference to "an embodiment", "some embodiments", or the like described in embodiments of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It should be understood that the technical solutions in embodiments of this application may be applied to a long term evolution (long term evolution, LTE) architecture, a 5th generation mobile communication technology (5th generation mobile network, 5G), a wireless local area network (wireless local area network, WLAN) system, a V2X communication system, and the like. The technical solutions in embodiments of this application may be further applied to another future communication system, for example, a 6G communication system. In the future communication system, a same function may be maintained, but a name may be changed.

The following describes a basic architecture of a communication system according to embodiments of this application.

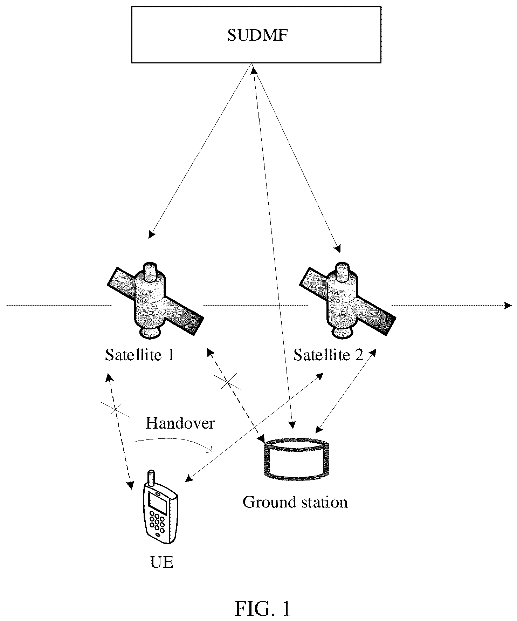

Refer to FIG. 1. FIG. 1 is a diagram of an architecture of a communication system according to an embodiment of this application. As shown in FIG. 1, the communication system may include a satellite user data management function (satellite user data management function, SUDMF), one or more satellites (for example, a satellite 1 and a satellite 2 in FIG. 1), a ground station, and user equipment (user equipment, UE). The UE may access a network through a satellite, to complete a corresponding service via the satellite network. Satellites have three classifications: low earth orbit satellites, medium earth orbit satellites, and high earth orbit satellites, based on orbit altitudes. The high earth orbit satellites are stationary relative to the ground, and the low earth orbit satellites and the medium earth orbit satellites constantly move relative to the ground. Due to such mobility, the UE accesses different satellites at intervals. This process is referred to as handover. As shown in FIG. 1, it is assumed that the satellite moves from left to right. Therefore, the satellites accessed by the UE may change based on the satellite 1→the satellite 2. In other words, due to mobility of the satellites, the UE may be handed over from the satellite 1 to the satellite 2. Generally, after the UE accesses the network, user data (data for short) is generated, and the network needs to store the data to maintain a continuous user service. The data of the UE is usually stored in a centralized manner in a data domain on the ground, for example, a database (database, DB) of the ground station or a data center.

The satellite in this application refers to an artificial aircraft that periodically runs around the earth orbit.

The terminal device in this application is an entity for receiving signals, or sending signals, or receiving signals and sending signals on a user side. The terminal device may be configured to provide one or more of a voice service and a data connectivity service for a user. The terminal device may be a device that has wireless sending and receiving functions and that can cooperate with a network device to provide a communication service for a user. Specifically, the terminal device may refer to user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device-to-device, D2D) device, for example, an electricity meter or a water meter. Alternatively, the terminal device may be a terminal in a 5G system, or a terminal in a next-generation communication system. This is not limited in embodiments of this application.

The ground station in this application is a key node for satellite data to be transmitted to a data network or the internet. A DB or the like may be deployed in the ground station. This is not limited herein.

The SUDMF in this application is a new network function, and the new network function is mainly responsible for user data management. Optionally, the new network function may also be referred to as another name. This is not limited herein. Optionally, the new network function may be deployed at a flexible location, for example, may be deployed on a satellite, or may be deployed on the ground, for example, in a ground station or a data center. Specifically, when the new network function obtains a handover decision, the new network function may send a first message to a target satellite (for example, the satellite 2). The first message indicates the target satellite to obtain user data of a terminal device from a source satellite (for example, the satellite 1). In other words, after the target satellite receives the first message, the target satellite may directly subscribe to the user data of the terminal device from the source satellite, instead of pulling data from a database (database, DB) of a ground station. Therefore, access pressure caused by the target satellite on the ground station in a handover scenario can be reduced.

The following describes in detail a communication method and a communication apparatus provided in this application.

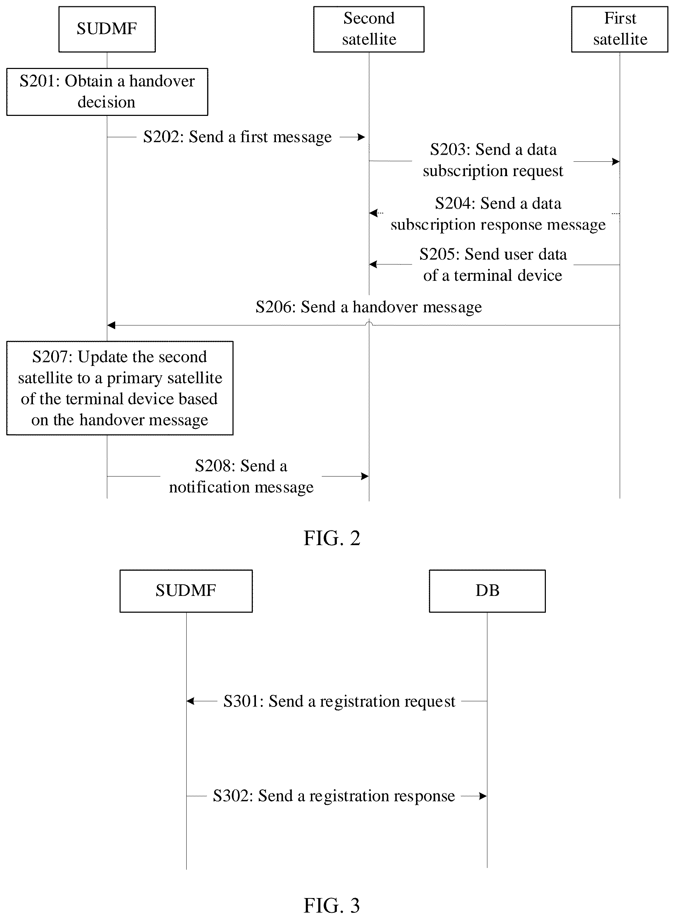

Refer to FIG. 2. FIG. 2 is an interaction diagram of a communication method according to an embodiment of this application. As shown in FIG. 2, the communication method includes the following steps S201 to S208. The method shown in FIG. 2 may be performed by an SUDMF, a first satellite, and/or a second satellite. Alternatively, the method shown in FIG. 2 may be performed by a chip in the SUDMF, a chip in the first satellite, and/or a chip in the second satellite. It should be noted that FIG. 2 is a schematic flowchart of a method embodiment of this application, and shows detailed communication steps or operations of the method. However, these steps or operations are merely an example. Other operations or variants or various operations in FIG. 2 may alternatively be performed in embodiments of this application. In addition, the steps in FIG. 2 may be performed in a sequence different from that shown in FIG. 2, and not all operations in FIG. 2 may be performed. In FIG. 2, an example in which the method is performed by the SUDMF, the first satellite, and the second satellite is mainly used for description.

S201: The SUDMF obtains a handover decision.

In some feasible implementations, the handover decision includes information about a terminal device, address information of the first satellite, and address information of the second satellite. The first satellite is a source satellite of the terminal device, that is, a satellite accessed by the terminal device before handover or a satellite that provides a service for the terminal device before handover. The second satellite is a target satellite of the terminal device, that is, a satellite accessed by the terminal device after handover or a satellite that provides a service for the terminal device after handover. The information about the terminal device may be, for example, identification information of the terminal device, or address information of the terminal device. This is not limited herein.

It should be understood that, in an implementation, that the SUDMF obtains the handover decision may be understood as follows: The SUDMF receives the handover decision sent by another network device having a handover decision function.

Optionally, in another implementation, that the SUDMF obtains the handover decision may be understood as follows: The SUDMF autonomously determines the handover decision. For example, each satellite may report status information of the satellite to the SUDMF. Correspondingly, the SUDMF may receive status information from at least two satellites. The status information of each satellite includes one or more of the following information: orbit information of the satellite, location information of the satellite, beam occupation of the satellite, and information about a terminal device that accesses the satellite. The at least two satellites include the first satellite and the second satellite. Further, the SUDMF determines the handover decision based on the received status information of the at least two satellites. In other words, the SUDMF may determine, based on status information reported by each satellite in a management domain, whether the terminal device needs to be handed over, and a satellite to which the terminal device needs to be handed over. Optionally, the handover decision may further include a specific beam to be used for connection. It should be understood that the orbit information of the satellite may be a specific movement track of the satellite around the earth, and the location information of the satellite may include an altitude, a global positioning system (global positioning system, GPS) location, and the like of the satellite. Generally, an antenna of a satellite can generate a plurality of mutually isolated beams within a coverage area of the satellite, and different beams may be used to serve different terminal devices. Therefore, the beam occupation of the satellite may be understood as which beam resources of the satellite have been occupied by access of terminal devices and which beam resources are in an idle and to-be-used state. The information about the terminal device that accesses the satellite may include location information, a speed, a signal measurement report, and the like of the terminal device. This is not limited herein. It may be understood that, for a manner of implementing the handover decision by the another network device having the handover decision function, refer to the manner of implementing the handover decision by the SUDMF. Details are not described herein.

S202: The SUDMF sends a first message to the second satellite. Correspondingly, the second satellite receives the first message from the SUDMF.

In some feasible implementations, after the SUDMF obtains the handover decision, the SUDMF may send the first message to the second satellite (that is, the target satellite), and the first message indicates the second satellite to obtain user data of the terminal device from the first satellite. Herein, the first message may also be described as a data subscription instruction (data_sub_inst). This is not limited herein.

S203: The second satellite sends a data subscription request to the first satellite. Correspondingly, the first satellite receives the data subscription request from the second satellite.

In some feasible implementations, after the second satellite receives the first message, the second satellite may send the data subscription request to the first satellite, where the data subscription request is used to request (subscribe to) the user data of the terminal device.

S204: The first satellite sends a data subscription response message to the second satellite. Correspondingly, the second satellite receives the data subscription response message from the first satellite.

For example, the data subscription response message may indicate whether the first satellite successfully receives the data subscription request. For example, the data subscription response message may include positive acknowledgment information or negative acknowledgment information. The positive acknowledgment information indicates that the first satellite successfully receives the data subscription request, and the negative acknowledgment information indicates that the first satellite fails to receive the data subscription request.

Step S204 is an optional step.

S205: The first satellite sends the user data of the terminal device to the second satellite, to keep the user data of the terminal device synchronized between the first satellite and the second satellite.

In some feasible implementations, the first satellite sends the user data of the terminal device to the second satellite. Correspondingly, the second satellite receives the user data of the terminal device from the first satellite, to keep the user data of the terminal device synchronized between the first satellite and the second satellite. It should be understood that, to keep the user data synchronized between the first satellite and the second satellite, the first satellite may need to send the user data of the terminal device to the second satellite a plurality of times. In other words, before the terminal device is disconnected from the first satellite, if the user data in the first satellite is updated, the first satellite needs to synchronously send updated user data to the second satellite.

S206: The first satellite sends a handover message to the SUDMF. Correspondingly, the SUDMF receives the handover message from the first satellite.

In some feasible implementations, when the terminal device is handed over from the first satellite, the first satellite may send the handover message (ue_switch_notify) to the SUDMF, to notify that the terminal device is handed over. In other words, the handover message indicates that the terminal device is disconnected from the first satellite.

S207: The SUDMF updates the second satellite to a primary satellite of the terminal device based on the handover message.

In some feasible implementations, after receiving the handover message from the first satellite, the SUDMF may learn that the terminal device has been disconnected from the first satellite. Therefore, the SUDMF may update the second satellite to the primary satellite of the terminal device. It should be understood that the primary satellite in this embodiment of this application may be configured to establish contact with a DB corresponding to the terminal device, and keep the user data of the terminal device synchronized between the primary satellite and the DB.

S208: The SUDMF sends a notification message to the second satellite. Correspondingly, the second satellite receives the notification message from the SUDMF.

In some feasible implementations, the notification message indicates that the second satellite is the primary satellite of the terminal device.

Optionally, in some feasible implementations, the notification message may alternatively not be sent by the SUDMF to the second satellite, but is sent by the first satellite to the second satellite. In other words, the first satellite may send the notification message to the second satellite after the first satellite sends the handover message to the SUDMF, or before the first satellite sends the handover message to the SUDMF, or when the first satellite sends the handover message to the SUDMF, and the notification message directly indicates that the second satellite is the primary satellite of the terminal device.

Optionally, in some feasible implementations, the second satellite may alternatively be notified, in an indirect indication manner, that the second satellite is set as the primary satellite of the terminal device. For example, the SUDMF may forward the handover message to the second satellite. After the second satellite receives the handover message from the SUDMF, the second satellite may determine, based on the handover message, that the terminal device has been disconnected from the first satellite, and then the second satellite may learn that the second satellite is set as the primary satellite of the terminal device. In another example, the first satellite may forward the handover message to the second satellite. After the second satellite receives the handover message from the first satellite, the second satellite may determine, based on the handover message, that the terminal device has been disconnected from the first satellite. Therefore, the second satellite may learn that the second satellite is set as the primary satellite of the terminal device.

It should be understood that after the second satellite determines that the second satellite is set as the primary satellite of the terminal device, the second satellite may establish contact with the DB and synchronize the user data.

It may be understood that step S208 is an optional step.

It should be noted that the DB in this embodiment of this application may be deployed on the ground, for example, in a ground station. The SUDMF may manage a plurality of DBs at the same time, and features of the DBs may be different. For example, address information (for example, internet protocol (internet protocol, IP) addresses) of the DBs, database types of the DBs, and/or capacities of the DBs are different. It should be understood that when a system is initialized or a new DB is added to the system, the new DB can be allocated to the terminal device for use only after being registered with the SUDMF. For example, a process in which the DB is registered with the SUDMF is shown in FIG. 3.

S301: The DB sends a registration request to the SUDMF, where the registration request includes information about the DB. For example, the information about the DB carried in the registration request may include information such as address information of the DB, a capacity of the DB, and/or a database type of the DB.

S302: After receiving the registration request from the DB, the SUDMF may return a registration response to the DB. The registration response includes information about whether the DB is successfully registered. It should be understood that only a DB that is successfully registered can be allocated to the terminal device for use, and a DB that fails to be registered cannot be allocated to the terminal device for use. For ease of understanding, in embodiments of this application, an example in which the registration response indicates that the DB is successfully registered is mainly used for description.

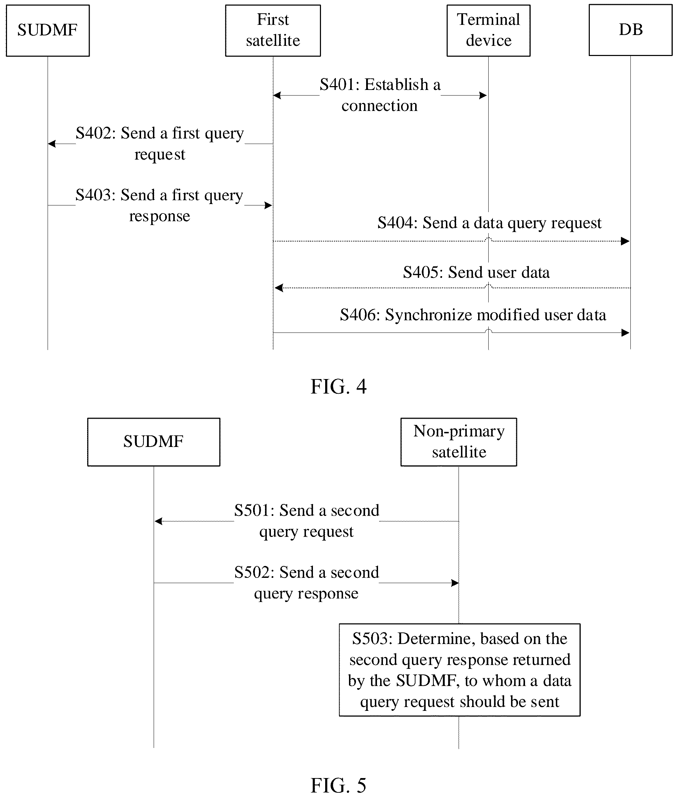

It may be understood that, after a DB is successfully registered with the SUDMF, the DB may be allocated by the SUDMF to the terminal device for use. Generally, when a terminal device accesses for the first time (initially), the SUDMF may allocate a DB to the terminal device, or when a terminal device is disconnected from a satellite and then re-establishes a connection to the satellite, the SUDMF may allocate a DB to the terminal device. For example, a procedure in which a terminal device initially accesses a satellite (for example, the first satellite) is shown in FIG. 4.

S401: The terminal device establishes a connection with the first satellite. In this case, the first satellite may have no user data, or the first satellite has some previously stored user data.

S402: After establishing the connection with the terminal device, the first satellite initiates a first query request to the SUDMF, where the first query request includes a first identifier of the terminal device. The first identifier of the terminal device herein may be an address, a user ID, or the like of the terminal device. This is not limited herein.

S403: The SUDMF sends a first query response to the first satellite, where the first query response includes first information, and the first information is used to determine address information of a DB corresponding to the terminal device.

For example, the SUDMF may search for a corresponding DB address based on the first identifier of the terminal device carried in the first query request. If the DB address corresponding to the first identifier of the terminal device can be found, the SUDMF returns the found DB address to the first satellite. If the DB address corresponding to the first identifier of the terminal device is not found, the SUDMF allocates a DB from a DB pool to the terminal device, and maintains a mapping relationship between the first identifier of the terminal device and a DB address.

In an implementation, that the first information is used to determine the address information of the DB corresponding to the terminal device includes the following two cases.

Case 1: The first information directly indicates the address information of the DB corresponding to the terminal device, that is, the first query response directly includes the address information of the DB corresponding to the terminal device.

Case 2: The first information indicates a second identifier of the terminal device, that is, the first query response directly includes the second identifier of the terminal device. The second identifier of the terminal device is used to determine the address information of the DB corresponding to the terminal device. In other words, the first information may alternatively indirectly indicate the address information of the DB corresponding to the terminal device.

Optionally, when the first query response includes the second identifier of the terminal device, the first query response may further include a DB address calculation function f. Therefore, subsequently, the first satellite may calculate the DB address information based on the second identifier in the received first query response and the calculation function f. Optionally, the calculation function f may alternatively be predefined in a protocol or preconfigured. This is not limited herein.

For example, assuming that a length of the second identifier of the terminal device is 16 bits, where the first 4 bits are used to determine the DB address, and the last 12 bits are a first identifier of a user, the calculation function f may be obtaining the first 4 bits and mapping the first 4 bits to a corresponding DB. For example, assuming that a second identifier of a terminal device is 0001000000011010, where the first 4 bits are 0001, the first satellite may determine a corresponding DB based on the first 4 bits 0001 and the calculation function f.

S404: The first satellite obtains user data from the corresponding DB based on the address information of the DB returned by the SUDMF, that is, sends a data query request to the DB.

S405: After receiving the data query request, the DB feeds back the queried user data to the first satellite. After obtaining the user data queried from the DB, the first satellite may provide a service for the terminal device.

It should be noted that step S404 and step S405 are optional steps. When a terminal device accesses for the first time (initially), the DB does not have any user data. Therefore, the first satellite may not perform step S404 and step S405.

S406: In a process of serving the terminal device, modify the user data, and synchronize modified user data to the DB in a timely manner.

It should be noted that when serving a terminal device, a satellite also stores user data of the terminal device, and the user data stored in the satellite is consistent with user data in a DB corresponding to the terminal device. Generally, only one satellite has full right of control over data of a user at a same moment. This satellite is referred to as a primary satellite (that is, holder) of the user. That is, the primary satellite may establish contact with a DB corresponding to a terminal device, and may perform operations such as adding/deleting/modifying user data in the DB, to keep user data of the terminal device synchronized between the primary satellite and the DB. The SUDMF records and maintains a mapping relationship between the terminal device and the primary satellite. The primary satellite needs to periodically report a heartbeat to the SUDMF. If the heartbeat of the primary satellite times out due to a fault or another reason, the SUDMF deletes the mapping relationship between the terminal device and the primary satellite. Herein, the heartbeat report may be understood as that the primary satellite sends heartbeat information to the SUDMF, and the heartbeat information may enable the SUDMF to determine whether and when the primary satellite is faulty or terminated.

It should be understood that, for another primary satellite corresponding to a non-terminal device (referred to as a non-primary satellite for short), when the non-primary satellite needs to query user data of a terminal device, steps shown in FIG. 5 may be performed.

S501: The non-primary satellite initiates a second query request to an SUDMF, where the second query request includes a first identifier of the terminal device.

S502: After receiving the second query request, the SUDMF queries, based on the first identifier of the terminal device carried in the second query request, a mapping table between an identifier of the terminal device and a primary satellite; and if address information of a primary satellite corresponding to the first identifier of the terminal device exists in the mapping table, returns the address information of the corresponding primary satellite; or if there is no record in the mapping table (that is, there is no address information of a primary satellite corresponding to the first identifier of the terminal device), returns address information of a DB that stores the user data, or returns indication information indicating that a primary satellite corresponding to the terminal device cannot be found. In other words, the second satellite may send the second query response to the first satellite. If address information of the primary satellite corresponding to the terminal device exists, the second query response includes the address information of the primary satellite corresponding to the terminal device, or if address information of the primary satellite corresponding to the terminal device does not exist, the second query response includes the first information or second information, the first information is used to determine the address information of the DB corresponding to the terminal device, and the second information indicates that the address information of the primary satellite corresponding to the terminal device is not included.

S503: The non-primary satellite determines, based on a second query response returned by the SUDMF, to whom a data query request should be sent. For example, if the second query response includes the address information of the primary satellite, the non-primary satellite may initiate the data query request to the primary satellite. Correspondingly, the primary satellite receives the data query request from the non-primary satellite, and returns the queried user data to the non-primary satellite. In another example, if the second query response includes the first information, the non-primary satellite may determine the address information of the DB based on the first information, and directly query the DB for the user data. In another example, if the second query response includes the second information, and during initial access, the first query response received by the non-primary satellite includes the second identifier of the terminal device, the non-primary satellite may determine the address information of the DB of the terminal device based on the previously allocated second identifier of the terminal device when determining that the SUDMF does not include the address information of the primary satellite corresponding to the terminal device (that is, obtaining, through parsing, the second information included in the second query response). Therefore, subsequently, the non-primary satellite may directly query the DB for the user data based on the obtained address information of the DB.

For example, before the terminal device is handed over from the first satellite, that is, before the terminal device is disconnected from the first satellite, the first satellite is a primary satellite of the terminal device, and the second satellite is a non-primary satellite. In another example, after the terminal device is handed over from the first satellite to the second satellite, that is, after the terminal device is connected to the second satellite, the second satellite is the primary satellite of the terminal device, and the first satellite is a non-primary satellite.

In embodiments of this application, a new satellite (that is, the second satellite) accessed by the terminal device directly subscribes to the user data from the source satellite (that is, the first satellite), instead of pulling data from the DB. Therefore, a query request for the DB is reduced in a handover process. In addition, the SUDMF may notify, in advance before handover, the target satellite to establish a data synchronization relationship. Therefore, before the terminal device is handed over to the second satellite, the second satellite has complete data of the user, and when the terminal device is handed over to the second satellite, the second satellite may directly serve the terminal device. Compared with a previous manner in which user data is pulled from the DB after handover to the second satellite, this solution can further effectively reduce a service interruption delay caused by handover.

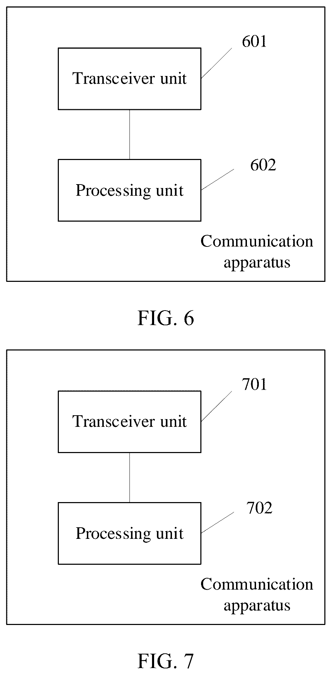

The following describes in detail the communication apparatus provided in this application with reference to FIG. 6 to FIG. 8. It may be understood that in the foregoing implementations, to implement the foregoing functions, each device includes a corresponding hardware structure and/or software module for performing each function. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the SUDMF, the first satellite, or the second satellite may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

Refer to FIG. 6. FIG. 6 is a diagram of a structure of a communication apparatus according to an embodiment of this application. The communication apparatus shown in FIG. 6 may be configured to perform some or all of the functions of the SUDMF in the method embodiment described in FIG. 2. The apparatus may be the SUDMF, or may be an apparatus in the SUDMF, or may be an apparatus that can match the SUDMF for use. The communication apparatus may alternatively be a chip or a chip system. The communication apparatus shown in FIG. 6 may include a transceiver unit 601 and a processing unit 602. The processing unit 602 is configured to perform data processing. The transceiver unit 601 is integrated with a receiving unit and a sending unit. The transceiver unit 601 may also be referred to as a communication unit. Alternatively, the transceiver unit 601 may be divided into a receiving unit and a sending unit. Optionally, the transceiver unit 601 may also have a function of obtaining information. The following processing unit and transceiver unit are similar. Details are not described again below.

The transceiver unit 601 is configured to obtain a handover decision, where the handover decision includes information about a terminal device, address information of a first satellite, and address information of a second satellite, the first satellite is a source satellite of the terminal device, and the second satellite is a target satellite of the terminal device.

The transceiver unit 601 is configured to send a first message to the second satellite, where the first message indicates the second satellite to obtain user data of the terminal device from the first satellite.

In a possible implementation, after sending the first message to the second satellite, the transceiver unit 601 is further configured to receive a handover message from the first satellite, where the handover message indicates that the terminal device is disconnected from the first satellite; and
the apparatus further includes a processing unit 602, and the processing unit 602 is configured to:
update the second satellite to a primary satellite of the terminal device based on the handover message, where the primary satellite is configured to establish contact with a database DB corresponding to the terminal device, and keep the user data of the terminal device synchronized between the primary satellite and the DB.

In a possible implementation, the transceiver unit 601 is further configured to:
send a notification message to the second satellite, where the notification message indicates that the second satellite is the primary satellite of the terminal device.

In a possible implementation, before obtaining the handover decision, the transceiver unit 601 is further configured to:
receive a registration request from the DB, where the registration request includes information about the DB; and
send a registration response to the DB, where the registration response indicates that the DB is successfully registered.

In a possible implementation, before obtaining the handover decision, the transceiver unit 601 is further configured to:
receive a first query request from the first satellite, where the first query request includes a first identifier of the terminal device; and
send a first query response to the first satellite, where the first query response includes first information, and the first information is used to determine address information of the DB corresponding to the terminal device.

In a possible implementation, after sending the notification message to the second satellite, the transceiver unit 601 is further configured to:
receive a second query request from the first satellite, where the second query request includes the first identifier of the terminal device, and the first satellite is not the primary satellite corresponding to the terminal device; and
send a second query response to the first satellite, where if address information of the primary satellite corresponding to the terminal device exists, the second query response includes the address information of the primary satellite corresponding to the terminal device, or if address information of the primary satellite corresponding to the terminal device does not exist, the second query response includes the first information or second information, the first information is used to determine the address information of the DB corresponding to the terminal device, and the second information indicates that the address information of the primary satellite corresponding to the terminal device is not included.

In a possible implementation, that the first information is used to determine the address information of the DB corresponding to the terminal device includes:
the first information indicates the address information of the DB corresponding to the terminal device; or
the first information indicates a second identifier of the terminal device, and the second identifier of the terminal device is used to determine the address information of the DB corresponding to the terminal device.

In a possible implementation, when the handover decision is obtained,
the transceiver unit 601 is configured to receive the handover decision; or
the transceiver unit 601 is configured to receive status information from at least two satellites, where status information of each satellite includes one or more of the following information: orbit information of the satellite, location information of the satellite, beam occupation of the satellite, and information about a terminal device that accesses the satellite; and the at least two satellites include the first satellite and the second satellite; and
the processing unit 602 is configured to determine the handover decision based on the status information of the at least two satellites.

For another possible implementation of the communication apparatus, refer to related descriptions of the function of the first satellite in the method embodiment corresponding to FIG. 2. Details are not described herein.

Refer to FIG. 7. FIG. 7 is a diagram of a structure of another communication apparatus according to an embodiment of this application. The communication apparatus shown in FIG. 7 may be configured to perform some or all of the functions of the first satellite or the second satellite in the method embodiment described in FIG. 2. The apparatus may be the first satellite or the second satellite, or may be an apparatus in the first satellite or the second satellite, or may be an apparatus that can match the first satellite or the second satellite for use. The communication apparatus may alternatively be a chip or a chip system. The communication apparatus shown in FIG. 7 may include a transceiver unit 701 and a processing unit 702.

In an implementation, the communication apparatus may be the second satellite.

The transceiver unit 701 is configured to receive a first message, where the first message indicates the second satellite to obtain user data of a terminal device from a first satellite.

The transceiver unit 701 is configured to send a data subscription request to the first satellite, where the data subscription request is used to request the user data of the terminal device.

The transceiver unit 701 is configured to receive the user data of the terminal device from the first satellite, to keep the user data of the terminal device synchronized between the first satellite and the second satellite.

In a possible implementation, the transceiver unit 701 is further configured to:
receive a notification message, where the notification message indicates that the second satellite is a primary satellite of the terminal device; or
receive a handover message, where the handover message indicates that the terminal device is disconnected from the first satellite.

In a possible implementation, before receiving the user data of the terminal device from the first satellite, the transceiver unit 701 is further configured to:
receive a data subscription response message from the first satellite.

In a possible implementation, before receiving the first message, the transceiver unit 701 is further configured to:
send a data query request to the first satellite, where the data query request is used to query the user data of the terminal device, and the first satellite is a primary satellite of the terminal device; and
receive the user data of the terminal device from the first satellite.

In a possible implementation, the transceiver unit 701 is further configured to:
send status information of the second satellite, where the status information of the second satellite includes one or more of the following information: orbit information of the second satellite, location information of the second satellite, beam occupation of the second satellite, and information about a terminal device that accesses the second satellite.

In another implementation, the communication apparatus may be the first satellite.

The transceiver unit 701 is configured to receive a data subscription request from a second satellite, where the data subscription request is used to request user data of a terminal device.

The transceiver unit 701 is configured to send the user data of the terminal device to the second satellite, to keep the user data of the terminal device synchronized between the first satellite and the second satellite.

In a possible implementation, the transceiver unit 701 is further configured to:
send a handover message, where the handover message indicates that the terminal device is disconnected from the first satellite; or
send a notification message, where the notification message indicates that the second satellite is a primary satellite of the terminal device.

In a possible implementation, before sending the user data of the terminal device to the second satellite, the transceiver unit 701 is further configured to:
send a data subscription response message to the second satellite.

In a possible implementation, before receiving the data subscription request from the second satellite, the transceiver unit 701 is further configured to:
receive a data query request from the second satellite, where the data query request is used to query the user data of the terminal device, and the first satellite is a primary satellite of the terminal device; and
send the user data of the terminal device to the second satellite.

In a possible implementation, before receiving the data subscription request from the second satellite, the transceiver unit 701 is further configured to:
send a first query request, where the first query request includes a first identifier of the terminal device; and
receive a first query response, where the first query response includes first information, and the first information is used to determine address information of a DB corresponding to the terminal device.

In a possible implementation, after sending the user data of the terminal device to the second satellite, the transceiver unit 701 is further configured to:
send a second query request, where the second query request includes the first identifier of the terminal device, and the first satellite is not the primary satellite corresponding to the terminal device; and
receive a second query response, where the second query response includes address information of the primary satellite corresponding to the terminal device, or the second query response includes the first information, and the first information is used to determine the address information of the DB corresponding to the terminal device.

In a possible implementation, that the first information is used to determine the address information of the DB corresponding to the terminal device includes:
the first information indicates the address information of the DB corresponding to the terminal device; or
the first information indicates a second identifier of the terminal device, and the second identifier of the terminal device is used to determine the address information of the DB corresponding to the terminal device.

In a possible implementation, the first information indicates the second identifier of the terminal device, and the second identifier of the terminal device is used to determine the address information of the DB corresponding to the terminal device; and after sending the user data of the terminal device to the second satellite, the transceiver unit 701 is further configured to:
send a second query request, where the second query request includes the first identifier of the terminal device, and the first satellite is not the primary satellite corresponding to the terminal device; and
receive a second query response, where the second query response includes second information, and the second information indicates that address information of the primary satellite corresponding to the terminal device is not included; and
the processing unit 702 is configured to determine, based on the second identifier of the terminal device, the address information of the DB corresponding to the terminal device.

In a possible implementation, the transceiver unit 701 is further configured to:
send status information of the first satellite, where the status information of the first satellite includes one or more of the following information: orbit information of the first satellite, location information of the first satellite, beam occupation of the first satellite, and information about a terminal device that accesses the first satellite.

For another possible implementation of the communication apparatus, refer to related descriptions of the function of the second satellite in the method embodiment corresponding to FIG. 2. Details are not described herein.

In a possible implementation, when the first satellite or the second satellite is a chip, the transceiver unit may be a communication interface, a pin, a circuit, or the like. The communication interface may be configured to input to-be-processed data into a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing unit may be a processor, and the processor may execute computer executable instructions stored in a storage unit, so that the chip performs the method in FIG. 2.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a register operand, an intermediate operation result, and the like that are temporarily stored during instruction execution. During specific implementation, a hardware architecture of the processor may be an ASIC architecture, a microprocessor without interlocked piped stages (microprocessor without interlocked piped stages architecture, MIPS) architecture, an advanced reduced instruction set computer machine (advanced RISC machine, ARM) architecture, a network processor (network processor, NP) architecture, or the like. The processor may be a single-core or multi-core processor.

The storage unit may be a storage unit in the chip, for example, a register or a cache. The storage unit may alternatively be a storage unit located outside the chip, for example, a ROM or another type of static storage device that can store static information and instructions, or a RAM.

It should be noted that functions corresponding to the processor and the interface may be implemented by using a hardware design, may be implemented by using a software design, or may be implemented by using a combination of software and hardware. This is not limited herein.

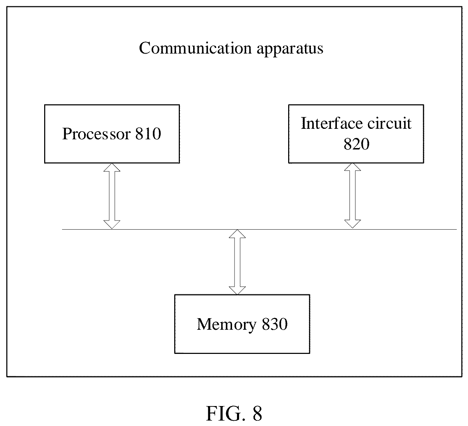

Refer to FIG. 8. FIG. 8 is a diagram of a structure of another communication apparatus according to an embodiment of this application. The communication apparatus includes a processor 810 and an interface circuit 820. The processor 810 and the interface circuit 820 are coupled to each other. It may be understood that the interface circuit 820 may be a transceiver or an input/output interface. Optionally, the communication apparatus may further include a memory 830, configured to: store instructions executed by the processor 810, or store input data required for running instructions by the processor 810, or store data generated after the processor 810 runs instructions.

When the communication apparatus is configured to implement the method in the foregoing method embodiments, the processor 810 is configured to perform a function of the processing unit, and the interface circuit 820 is configured to perform a function of the transceiver unit.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (Read-Only Memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in the first satellite or the second satellite. Certainly, the processor and the storage medium may alternatively exist as discrete components in the first satellite or the second satellite.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by a computer, or a data storage device such as a server integrating one or more usable media. The usable medium may be a magnetic medium, for example, a floppy disk, a hard disk, or a magnetic tape; or may be an optical medium, for example, a digital versatile disc (digital versatile disc, DVD); or may be a semiconductor medium, for example, a solid state drive (solid state drive, SSD).

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

An embodiment of this application further provides a computer-readable storage medium. The computer-readable storage medium stores computer executable instructions. When the computer executable instructions are executed, the method performed by the first satellite or the second satellite in the foregoing method embodiments is implemented.

An embodiment of this application further provides a computer program product. The computer program product includes a computer program. When the computer program is executed, the method performed by the first satellite or the second satellite in the foregoing method embodiments is implemented.

An embodiment of this application further provides a communication system. The communication system includes a first satellite or a second satellite. The first satellite is configured to perform the method performed by the first satellite in the foregoing method embodiments. The second satellite is configured to perform the method performed by the second satellite in the foregoing method embodiments.

It should be noted that, for brief description, the foregoing method embodiments are expressed as a series of action combinations. However, a person skilled in the art should appreciate that this application is not limited to the described order of the actions, because according to this application, some steps may be performed in other orders or simultaneously. In addition, a person skilled in the art should also appreciate that all embodiments described in the specification are example embodiments, and the related actions and modules are not necessarily mandatory to this application.

The descriptions of embodiments provided in this application may refer to each other, and the descriptions of embodiments have different focuses. For a part not described in detail in an embodiment, refer to the related descriptions in another embodiment. For ease of description and brevity, for functions of the apparatuses and devices provided in embodiments of this application and performed steps, refer to the related descriptions in the method embodiments of this application. The method embodiments and the apparatus embodiments may also be mutually referenced, combined, or cited.

A person of ordinary skill in the art may be aware that, in combination with the examples described in embodiments disclosed in this specification, units and steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into the units is merely logical function division. Units described as separate components may be or may not be physically separate, and components displayed as units may be or may not be physical units, may be located in one position, or may be distributed on a plurality of network units. Some or all of the units may be selected according to an actual requirement to achieve the objectives of the solutions in the embodiments.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing computer-readable storage medium may be any usable medium that can be accessed by a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can be used to carry or store expected program code in a form of instructions or a data structure and that can be accessed by a computer. In addition, by way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application. However, the protection scope of embodiments of this application is not limited thereto. Any change or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
obtaining a handover decision, wherein the handover decision comprises information about a terminal device, address information of a first satellite, and address information of a second satellite, the first satellite is a source satellite of the terminal device, and the second satellite is a target satellite of the terminal device; and
sending a first message to the second satellite, wherein the first message indicates the second satellite to obtain user data of the terminal device from the first satellite.

2. The method according to claim 1, wherein after sending the first message to the second satellite, the method further comprises:
receiving a handover message from the first satellite, wherein the handover message indicates that the terminal device is disconnected from the first satellite; and
updating the second satellite to a primary satellite of the terminal device based on the handover message, wherein the primary satellite is configured to establish contact with a database DB corresponding to the terminal device, and keep the user data of the terminal device synchronized between the primary satellite and the DB.

3. The method according to claim 2, wherein the method further comprises:
sending a notification message to the second satellite, wherein the notification message indicates that the second satellite is the primary satellite of the terminal device.

4. The method according to claim 2 or 3, wherein before obtaining the handover decision, the method further comprises:
receiving a registration request from the DB, wherein the registration request comprises information about the DB; and
sending a registration response to the DB, wherein the registration response indicates that the DB is successfully registered.

5. The method according to claim 4, wherein before obtaining the handover decision, the method further comprises:
receiving a first query request from the first satellite, wherein the first query request comprises a first identifier of the terminal device; and
sending a first query response to the first satellite, wherein the first query response comprises first information, and the first information is used to determine address information of the DB corresponding to the terminal device.

6. The method according to any one of claims 2 to 5, wherein after sending the notification message to the second satellite, the method further comprises:
receiving a second query request from the first satellite, wherein the second query request comprises the first identifier of the terminal device, and the first satellite is not the primary satellite corresponding to the terminal device; and
sending a second query response to the first satellite, wherein if address information of the primary satellite corresponding to the terminal device exists, the second query response comprises the address information of the primary satellite corresponding to the terminal device, or if address information of the primary satellite corresponding to the terminal device does not exist, the second query response comprises the first information or second information, the first information is used to determine the address information of the DB corresponding to the terminal device, and the second information indicates that the address information of the primary satellite corresponding to the terminal device is not comprised.

7. The method according to claim 5 or 6, wherein that the first information is used to determine the address information of the DB corresponding to the terminal device comprises:
the first information indicates the address information of the DB corresponding to the terminal device; or
the first information indicates a second identifier of the terminal device, and the second identifier of the terminal device is used to determine the address information of the DB corresponding to the terminal device.

8. The method according to any one of claims 1 to 7, wherein obtaining the handover decision comprises:
receiving the handover decision; or
receiving status information from at least two satellites, wherein status information of each satellite comprises one or more of the following information: orbit information of the satellite, location information of the satellite, beam occupation of the satellite, and information about a terminal device that accesses the satellite; and the at least two satellites comprise the first satellite and the second satellite; and
determining the handover decision based on the status information of the at least two satellites.

9. A communication method, wherein the method is applied to a second satellite and comprises:
receiving a first message, wherein the first message indicates the second satellite to obtain user data of a terminal device from the first satellite;
sending a data subscription request to the first satellite, wherein the data subscription request is used to request the user data of the terminal device; and
receiving the user data of the terminal device from the first satellite, to keep the user data of the terminal device synchronized between the first satellite and the second satellite.

10. The method according to claim 9, wherein the method further comprises:
receiving a notification message, wherein the notification message indicates that the second satellite is a primary satellite of the terminal device; or
receiving a handover message, wherein the handover message indicates that the terminal device is disconnected from the first satellite.

11. The method according to claim 9 or 10, wherein before receiving the user data of the terminal device from the first satellite, the method further comprises:
receiving a data subscription response message from the first satellite.

12. The method according to any one of claims 9 to 11, wherein before receiving the first message, the method further comprises:
sending a data query request to the first satellite, wherein the data query request is used to query the user data of the terminal device, and the first satellite is a primary satellite of the terminal device; and
receiving the user data of the terminal device from the first satellite.

13. The method according to any one of claims 9 to 12, wherein the method further comprises:
sending status information of the second satellite, wherein the status information of the second satellite comprises one or more of the following information: orbit information of the second satellite, location information of the second satellite, beam occupation of the second satellite, and information about a terminal device that accesses the second satellite.

14. A communication method, wherein the method is applied to a first satellite and comprises:
receiving a data subscription request from a second satellite, wherein the data subscription request is used to request user data of a terminal device; and
sending the user data of the terminal device to the second satellite, to keep the user data of the terminal device synchronized between the first satellite and the second satellite.

15. The method according to claim 14, wherein the method further comprises:
sending a handover message, wherein the handover message indicates that the terminal device is disconnected from the first satellite; or
sending a notification message, wherein the notification message indicates that the second satellite is a primary satellite of the terminal device.

16. The method according to claim 14 or 15, wherein before sending the user data of the terminal device to the second satellite, the method further comprises:
sending a data subscription response message to the second satellite.

17. The method according to any one of claims 14 to 16, wherein before receiving the data subscription request from the second satellite, the method further comprises:
receiving a data query request from the second satellite, wherein the data query request is used to query the user data of the terminal device, and the first satellite is a primary satellite of the terminal device; and
sending the user data of the terminal device to the second satellite.

18. The method according to any one of claims 14 to 16, wherein before receiving the data subscription request from the second satellite, the method further comprises:
sending a first query request, wherein the first query request comprises a first identifier of the terminal device; and
receiving a first query response, wherein the first query response comprises first information, and the first information is used to determine address information of a DB corresponding to the terminal device.

19. The method according to any one of claims 14 to 18, wherein after sending the user data of the terminal device to the second satellite, the method further comprises:
sending a second query request, wherein the second query request comprises the first identifier of the terminal device, and the first satellite is not the primary satellite corresponding to the terminal device; and
receiving a second query response, wherein the second query response comprises address information of the primary satellite corresponding to the terminal device, or the second query response comprises the first information, and the first information is used to determine the address information of the DB corresponding to the terminal device.

20. The method according to claim 18 or 19, wherein that the first information is used to determine the address information of the DB corresponding to the terminal device comprises:
the first information indicates the address information of the DB corresponding to the terminal device; or
the first information indicates a second identifier of the terminal device, and the second identifier of the terminal device is used to determine the address information of the DB corresponding to the terminal device.

21. The method according to claim 20, wherein the first information indicates the second identifier of the terminal device, and the second identifier of the terminal device is used to determine the address information of the DB corresponding to the terminal device; and after sending the user data of the terminal device to the second satellite, the method further comprises:
sending a second query request, wherein the second query request comprises the first identifier of the terminal device, and the first satellite is not the primary satellite corresponding to the terminal device;
receiving a second query response, wherein the second query response comprises second information, and the second information indicates that address information of the primary satellite corresponding to the terminal device is not comprised; and
determining, based on the second identifier of the terminal device, the address information of the DB corresponding to the terminal device.

22. The method according to any one of claims 14 to 21, wherein the method further comprises:
sending status information of the first satellite, wherein the status information of the first satellite comprises one or more of the following information: orbit information of the first satellite, location information of the first satellite, beam occupation of the first satellite, and information about a terminal device that accesses the first satellite.

23. A communication apparatus, comprising:
a transceiver unit, configured to obtain a handover decision, wherein the handover decision comprises information about a terminal device, address information of a first satellite, and address information of a second satellite, the first satellite is a source satellite of the terminal device, and the second satellite is a target satellite of the terminal device, wherein
the transceiver unit is configured to send a first message to the second satellite, wherein the first message indicates the second satellite to obtain user data of the terminal device from the first satellite.

24. The apparatus according to claim 23, wherein after sending the first message to the second satellite, the transceiver unit is further configured to receive a handover message from the first satellite, wherein the handover message indicates that the terminal device is disconnected from the first satellite; and
the apparatus further comprises a processing unit, and the processing unit is configured to:
update the second satellite to a primary satellite of the terminal device based on the handover message, wherein the primary satellite is configured to establish contact with a database DB corresponding to the terminal device, and keep the user data of the terminal device synchronized between the primary satellite and the DB.

25. The apparatus according to claim 24, wherein the transceiver unit is further configured to:
send a notification message to the second satellite, wherein the notification message indicates that the second satellite is the primary satellite of the terminal device.

26. The apparatus according to claim 24 or 25, wherein before obtaining the handover decision, the transceiver unit is further configured to:
receive a registration request from the DB, wherein the registration request comprises information about the DB; and
send a registration response to the DB, wherein the registration response indicates that the DB is successfully registered.

27. The apparatus according to claim 26, wherein before obtaining the handover decision, the transceiver unit is further configured to:
receive a first query request from the first satellite, wherein the first query request comprises a first identifier of the terminal device; and
send a first query response to the first satellite, wherein the first query response comprises first information, and the first information is used to determine address information of the DB corresponding to the terminal device.

28. The apparatus according to any one of claims 24 to 27, wherein after sending the notification message to the second satellite, the transceiver unit is further configured to:
receive a second query request from the first satellite, wherein the second query request comprises the first identifier of the terminal device, and the first satellite is not the primary satellite corresponding to the terminal device; and
send a second query response to the first satellite, wherein if address information of the primary satellite corresponding to the terminal device exists, the second query response comprises the address information of the primary satellite corresponding to the terminal device, or if address information of the primary satellite corresponding to the terminal device does not exist, the second query response comprises the first information or second information, the first information is used to determine the address information of the DB corresponding to the terminal device, and the second information indicates that the address information of the primary satellite corresponding to the terminal device is not comprised.

29. The apparatus according to claim 27 or 28, wherein that the first information is used to determine the address information of the DB corresponding to the terminal device comprises:
the first information indicates the address information of the DB corresponding to the terminal device; or
the first information indicates a second identifier of the terminal device, and the second identifier of the terminal device is used to determine the address information of the DB corresponding to the terminal device.

30. The apparatus according to any one of claims 23 to 29, wherein when the handover decision is obtained,
the transceiver unit is configured to receive the handover decision; or
the transceiver unit is configured to receive status information from at least two satellites, wherein status information of each satellite comprises one or more of the following information: orbit information of the satellite, location information of the satellite, beam occupation of the satellite, and information about a terminal device that accesses the satellite; and the at least two satellites comprise the first satellite and the second satellite; and
the processing unit is configured to determine the handover decision based on the status information of the at least two satellites.

31. A communication apparatus, wherein the apparatus is used in a second satellite and comprises:
a transceiver unit, configured to receive a first message, wherein the first message indicates the second satellite to obtain user data of the terminal device from the first satellite, wherein
the transceiver unit is configured to send a data subscription request to the first satellite, wherein the data subscription request is used to request the user data of a terminal device; and
the transceiver unit is configured to receive the user data of the terminal device from the first satellite, to keep the user data of the terminal device synchronized between the first satellite and the second satellite.

32. The apparatus according to claim 31, wherein the transceiver unit is further configured to:
receive a notification message, wherein the notification message indicates that the second satellite is a primary satellite of the terminal device; or
receive a handover message, wherein the handover message indicates that the terminal device is disconnected from the first satellite.

33. The apparatus according to claim 31 or 32, wherein before receiving the user data of the terminal device from the first satellite, the transceiver unit is further configured to:
receive a data subscription response message from the first satellite.

34. The apparatus according to any one of claims 31 to 33, wherein before receiving the first message, the transceiver unit is further configured to:
send a data query request to the first satellite, wherein the data query request is used to query the user data of the terminal device, and the first satellite is a primary satellite of the terminal device; and
receive the user data of the terminal device from the first satellite.

35. The apparatus according to any one of claims 31 to 34, wherein the transceiver unit is further configured to:
send status information of the second satellite, wherein the status information of the second satellite comprises one or more of the following information: orbit information of the second satellite, location information of the second satellite, beam occupation of the second satellite, and information about a terminal device that accesses the second satellite.

36. A communication apparatus, wherein the apparatus is used in a first satellite and comprises:
a transceiver unit, configured to receive a data subscription request from a second satellite, wherein the data subscription request is used to request user data of a terminal device, wherein
the transceiver unit is configured to send the user data of the terminal device to the second satellite, to keep the user data of the terminal device synchronized between the first satellite and the second satellite.

37. The apparatus according to claim 36, wherein the transceiver unit is further configured to:
send a handover message, wherein the handover message indicates that the terminal device is disconnected from the first satellite; or
send a notification message, wherein the notification message indicates that the second satellite is a primary satellite of the terminal device.

38. The apparatus according to claim 36 or 37, wherein before sending the user data of the terminal device to the second satellite, the transceiver unit is further configured to:
send a data subscription response message to the second satellite.

39. The apparatus according to any one of claims 36 to 38, wherein before receiving the data subscription request from the second satellite, the transceiver unit is further configured to:
receive a data query request from the second satellite, wherein the data query request is used to query the user data of the terminal device, and the first satellite is a primary satellite of the terminal device; and
send the user data of the terminal device to the second satellite.

40. The apparatus according to any one of claims 36 to 38, wherein before receiving the data subscription request from the second satellite, the transceiver unit is further configured to:
send a first query request, wherein the first query request comprises a first identifier of the terminal device; and
receive a first query response, wherein the first query response comprises first information, and the first information is used to determine address information of a DB corresponding to the terminal device.

41. The apparatus according to any one of claims 36 to 40, wherein after sending the user data of the terminal device to the second satellite, the transceiver unit is further configured to:
send a second query request, wherein the second query request comprises the first identifier of the terminal device, and the first satellite is not the primary satellite corresponding to the terminal device; and
receive a second query response, wherein the second query response comprises address information of the primary satellite corresponding to the terminal device, or the second query response comprises the first information, and the first information is used to determine the address information of the DB corresponding to the terminal device.

42. The apparatus according to claim 40 or 41, wherein that the first information is used to determine the address information of the DB corresponding to the terminal device comprises:
the first information indicates the address information of the DB corresponding to the terminal device; or
the first information indicates a second identifier of the terminal device, and the second identifier of the terminal device is used to determine the address information of the DB corresponding to the terminal device.

43. The apparatus according to claim 42, wherein the first information indicates the second identifier of the terminal device, and the second identifier of the terminal device is used to determine the address information of the DB corresponding to the terminal device; and after sending the user data of the terminal device to the second satellite, the transceiver unit is further configured to:
send a second query request, wherein the second query request comprises the first identifier of the terminal device, and the first satellite is not the primary satellite corresponding to the terminal device; and
receive a second query response, wherein the second query response comprises second information, and the second information indicates that address information of the primary satellite corresponding to the terminal device is not comprised; and
the processing unit is configured to determine, based on the second identifier of the terminal device, the address information of the DB corresponding to the terminal device.

44. The apparatus according to any one of claims 36 to 43, wherein the transceiver unit is further configured to:
send status information of the first satellite, wherein the status information of the first satellite comprises one or more of the following information: orbit information of the first satellite, location information of the first satellite, beam occupation of the first satellite, and information about a terminal device that accesses the first satellite.

45. A communication apparatus, comprising:
one or more processors, one or more transceivers, and one or more memories, wherein
the one or more memories are configured to store a computer program, and the one or more processors and the one or more transceivers are configured to execute the computer program stored in the one or more memories, to enable the communication apparatus to perform the method according to any one of claims 1 to 8, or perform the method according to any one of claims 9 to 13, or perform the method according to any one of claims 14 to 22.

46. A computer-readable storage medium, wherein the storage medium stores a computer program or instructions, and when the computer program or the instructions are executed by a computer, the method according to any one of claims 1 to 8 is implemented, or the method according to any one of claims 9 to 13 is implemented, or the method according to any one of claims 14 to 22 is implemented.

47. A computer program product, comprising computer program code, wherein when the computer program code is run on a computer, the method according to any one of claims 1 to 8 is implemented, or the method according to any one of claims 9 to 13 is implemented, or the method according to any one of claims 14 to 22 is implemented.

48. A chip or a chip system, comprising an input/output interface and a processing circuit, wherein the input/output interface is configured to exchange information or data, and the processing circuit is configured to run instructions, to enable an apparatus on which the chip or the chip system is installed to perform the method according to any one of claims 1 to 8, or perform the method according to any one of claims 9 to 13, or perform the method according to any one of claims 14 to 22.
